# EUROPEAN PATENT SPECIFICATION

(11) **EP 3 186 067 B1**
(45) Date of publication and mention of the grant of the patent: **14.04.2021**
(21) Application number: 15770968.4
(22) Date of filing: 29.07.2015
(51) Int. Cl.: B33Y 40/00, B33Y 30/00, B29C 64/106, B29C 64/112, B29C 64/232, B29C 64/236, B29C 64/241, B29C 64/245

(54) **3D PRINTING SYSTEM**
3D-DRUCKSYSTEM
SYSTÈME D'IMPRESSION 3D

(30) Priority: 26.08.2014 CN 201410424240
(43) Date of publication of application: 05.07.2017
(73) Proprietor: Tyco Electronics (Shanghai) Co., Ltd., Shanghai 201208 (CN); TE Connectivity Corporation, Berwyn, PA 19312 (US)
(72) Inventor: DENG, Yingcong, Caohejing, Shanghai 200233 (CN); XIN, Liming, Shanghai (CN); ZHANG, Dandan, Shanghai (CN); LU, Roberto Francisco-YI, Shanghai (CN); HU, Lvhai, Shanghai (CN); LIU, Yun, Caohejing, Shanghai 200233 (CN)
(74) Representative: Grünecker Patent- und Rechtsanwälte PartG mbB
(86) International application number: PCT/IB2015/055707
(87) International publication number: WO 2016/030782

(56) References cited:
- WO-A1-2012/171644
- WO-A2-97/19798
- US-A1- 2012 251 688

## Description

### BACKGROUND OF THE INVENTION

### Field of the Invention

Embodiments of the present disclosure relate to a 3D printing system.

### Description of the Related Art

In the prior art, 3D (3-Dimension) printing system generally includes a robot and a print head mounted on an end-effector of the robot. Materials are sprayed from the print head onto a positioning platform to form a product having a desired shape on the positioning platform, as the robot moves the print head based on a route predetermined by a procedure.

3D printing method is different from the conventional machining method. In 3D printing method, a product having desired shape is achieved by adding materials, instead of removing materials in machining method.

In the prior art, the robot for manipulating the print head can only move in X, Y and Z direction perpendicular to each other, and the positioning platform for supporting the product made from the materials is stationary. Additionally, the product to be printed is divided into a plurality of 2-Dimension horizontal layers in Z direction, the robot then manipulates the printing head to move in a horizontal plane defined by X, Y, to print the plurality of 2-Dimension horizontal layers mentioned above successively, thus the whole product may be achieved by successively overlaying the plurality of 2-Dimension horizontal layers in Z direction.

Since such existing 3D printing system only move in X, Y and Z direction perpendicular to each other, only the space position of the print head may be adjusted with respect to the positioning platform, but the angle of the print head with respect to the positioning platform cannot be adjusted. Therefore, in such existing 3D printing system, the print head only can be moved over a 2-Dimension plane or a 2-Dimension curve, rather than a 3-Dimension curved surface or a 3-Dimension curve, thus limiting its usage.

3D printing devices and/or methods for 3D printing of the art are, for instance, disclosed in WO 2012/171644 A1 or US 2012/0251688 A1.

### SUMMARY OF THE INVENTION

The purpose of the present disclosure is intended to solve at least one aspect of the above issues and faults in the prior art.

One object of the present invention is to provide a 3D printing system, in which the print head may be moved over a 3-Dimension curved surface or a 3-Dimension curve.

According to an aspect of the present invention, there is provided a 3D printing system according to claim 1, comprising: a print head constructed to print a product; a positioning platform constructed to support and position the product to be printed thereon; and a first movement device constructed to manipulate the positioning platform. The first movement device is constructed so that the positioning platform is moved with respect to the print head in a first direction, a second direction and a third direction perpendicular to each other, and rotated with respect to the print head about at least two of the first, second and third directions. The first movement device comprises a spherical movement device wherein the spherical movement device comprises: a first rotation driver having an output shaft rotating about the first direction; a second rotation driver having an output shaft rotating about the second direction perpendicular to the first direction; a first quarter arc linkage, one end of which is connected to the output shaft of the first rotation driver; a second quarter arc linkage, one end of which is pivotally connected to the positioning platform, and the other end of which is pivotally connected to the other end of the first quarter arc linkage; and a third quarter arc linkage, one end of which is connected to the output shaft of the second rotation driver, and the other end of which is pivotally connected to the positioning platform. Extending lines of a pivotal axis at a joint of the first quarter arc linkage and the second quarter arc linkage, a pivotal axis at a joint of the second quarter arc linkage and the positioning platform, a pivotal axis at a joint of the third quarter arc linkage and the positioning platform, an axis of the output shaft of the first rotation driver, and an axis of the output shaft of the second rotation driver intersect at the same point.

According to another exemplary embodiment of the present invention, the print head is stationary; and the first movement device is constructed to drive the positioning platform.

The first movement device may be constructed to drive the positioning platform to rotate about the first direction, the second direction, and the third direction.

According to another exemplary embodiment of the present invention, the 3D printing system further comprises a second movement device constructed to manipulate the printing head to move in at least one direction, and/or to rotate about at least one direction.

According to another exemplary embodiment of the present invention, the second movement device comprises a robot with at least three freedoms.

According to another exemplary embodiment of the present invention, the robot is constructed to drive the printing head to move in the first direction, the second direction and the third direction perpendicular to each other. According to another exemplary embodiment of the present invention, the robot comprises a planar articulated robot, a six-axis robot, a Cartesian coordinate robot, a serial robot, a parallel robot or a serial-parallel robot.

According to another exemplary embodiment of the present invention, the positioning platform is mounted on the spherical movement device.

According to another exemplary embodiment of the present invention, the same point is located at a geometric center of the positioning platform.

According to another exemplary embodiment of the present invention, the first rotation driver and the second rotation driver are mounted on a first vertical mounting plate and a second vertical mounting plate, respectively; and the first vertical mounting plate and the second vertical mounting plate are mounted on a base.

According to another exemplary embodiment of the present invention, materials, which are sprayed from the print head to form the product, are provided by a material supply unit mounted on an end-effector of the robot.

According to another aspect of the present disclosure, materials, which are sprayed from the print head to form the product, are provided by a remote material supply unit far away from the second robot.

According to another aspect of the present disclosure, the whole product is formed only by the 3D printing system.

According to another aspect of the present disclosure, a blank is previously formed as one portion of the product by means of non-3D printing, and the other portion of the product is formed on the blank by the 3D printing system.

According to another aspect of the present disclosure, the first movement device and the second movement device are mounted on a base.

In the 3D printing systems according to various embodiments of the present invention, the positioning platform is drive to move with respect to the print head in a first direction, a second direction and a third direction perpendicular to each other, and rotate with respect to the print head about at least two of the first, second and third directions. Therefore, the print head is drive to move over a 3-Dimension curved surface or a 3-Dimension curve with respect to the positioning platform, so as to print a complicated 3-Dimension curved surface or 3-Dimension curve.

Other characteristics and advantages of the present disclosure will be made clear by the following detailed description, the comprehension of which will be facilitated by reference to the attached drawings.

### BRIEF DESCRIPTION OF THE DRAWINGS

The present invention will be further described in detail with reference to the accompanying drawings, in which:

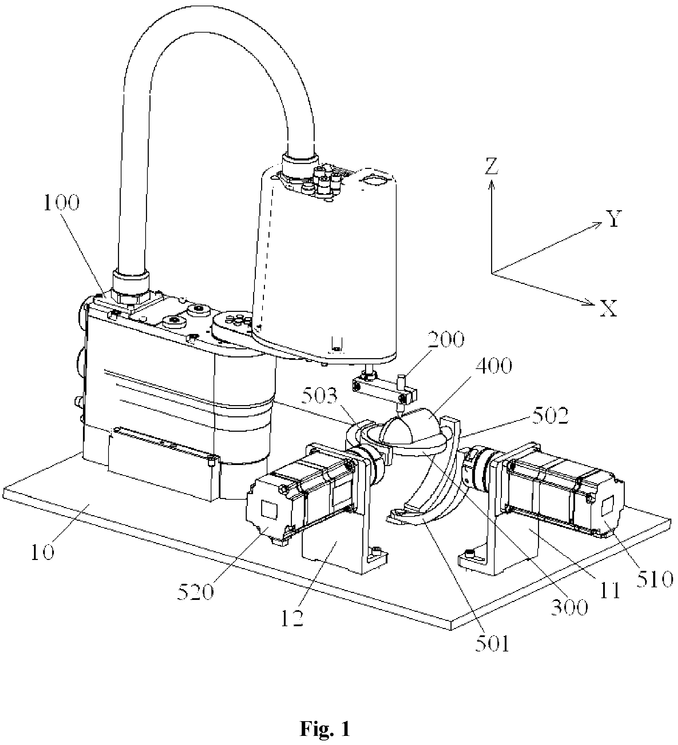

Fig. 1 is a schematic perspective view showing a 3D printing system according to an exemplary embodiment of the present invention.

### DETAILED DESCRIPTION OF PREFERRED EMBODIMENTS OF THE INVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present disclosure, there is provided a 3D printing system, comprising: a print head constructed to print a product; and a positioning platform constructed to support and position the product to be printed thereon. The 3D printing system is constructed so that the positioning platform is moved with respect to the print head in a first direction, a second direction and a third direction perpendicular to each other, and rotated with respect to the print head about at least two of the first, second and third directions.

### First embodiment

Fig. 1 is a schematic perspective view showing a 3D printing system according to an exemplary embodiment of the present invention.

As shown in Fig. 1, in an exemplary embodiment of the present invention, the 3D printing system primarily comprises a robot 100, a print head 200, a positioning platform 300 and a first movement device.

As shown in Fig. 1, in the illustrated embodiment, the robot (also referred to as a second movement device or a second robot) 100 and the first movement device are mounted on a base 10. The print head 200 is mounted on an end-effector of the robot 100. The positioning platform 300 is mounted on the first movement device

In an exemplary embodiment of the present invention, the robot 100 has at least three freedoms, and constructed to move the printing head 200 in a first direction X, a second direction Y, and a third direction Z perpendicular to each other, so as to print a desired product on the positioning platform 300 by the print head 200.

As shown in Fig. 1, in the illustrated embodiment, the first direction X and the second direction Y define a horizontal plane, and the third direction Z refers to a vertical direction perpendicular to the horizontal plane.

In an exemplary embodiment of the present invention, the first movement device may have at least one freedom, and constructed to drive the positioning platform 300 to rotate about at least one direction, thus the angle of the print head 200 with respect to the positioning platform 300 may be adjusted. Therefore, with aid of the cooperation of the first movement device and the robot 100, the print head 200 may move over a 3D curved surface or a 3D curve with respect to the positioning platform 300 and/or materials provided on the positioning platform.

In an exemplary embodiment of the present invention, the robot 100 may be a multi-freedom robot, such as an at least three freedom robot. The robot 100 may be, for example, a planar articulated robot, a six-axis robot, a Cartesian coordinate robot, a serial robot, a parallel robot or a serial-parallel robot.

As shown in Fig. 1, according to the present invention, the first movement device is a spherical movement device, and the positioning platform 300 may be mounted on the spherical movement device.

As shown in Fig. 1, the positioning platform 300 is constructed to rotate about the first direction X and the second direction Y perpendicular to the first direction X.

Further referring to Fig. 1, the spherical movement device primarily comprises: a first rotation driver 510 having an output shaft rotating about the first direction X; a second rotation driver 520 having an output shaft rotating about the second direction Y perpendicular to the first direction X; a first quarter arc linkage 501, one end of which is connected to the output shaft of the first rotation driver 510; a second quarter arc linkage 502, one end of which is pivotally connected to the positioning platform 300, and the other end of which is pivotally connected to the other end of the first quarter arc linkage 501; and a third quarter arc linkage 503, one end of which is connected to the output shaft of the second rotation driver 520, and the other end of which is pivotally connected to the positioning platform 300.

As shown in Fig. 1, extending lines of a pivotal axis at a joint of the first quarter arc linkage 501 and the second quarter arc linkage 502, a pivotal axis at a joint of the second quarter arc linkage 502 and the positioning platform 300, a pivotal axis at a joint of the third quarter arc linkage 503 and the positioning platform 300, an axis of the output shaft of the first rotation driver 510, and an axis of the output shaft of the second rotation driver 520 intersect at the same point. Furthermore, the same point is located at a geometric center of the positioning platform 300.

As shown in Fig. 1, the first rotation driver 510 and the second rotation driver 520 are mounted on a first vertical mounting plate 11 and a second vertical mounting plate 12, respectively; and the first vertical mounting plate 11 and the second vertical mounting plate 12 are mounted on a base 10.

As shown in Fig. 1, the first rotation driver 510 and the second rotation driver 520 may comprise a motor, respectively.

In an exemplary embodiment of the present invention, materials 400 sprayed from the print head 200 for forming the product may be provided by a material supply unit mounted on an end-effector of the robot 100, as long as the end-effector of the robot 100 may carry such material supply unit and materials contained therein.

In another example of the present disclosure, the materials 400 sprayed from the print head 200 for forming the product may be provided by a remote material supply unit far away from the robot 100.

In an example of the present disclosure, the whole product may be formed only by means of printing by the 3D printing system described above.

In another example present disclosure, a blank may be previously formed as one portion of the product by means of non-3D printing, for example, by means of casting, and the other portion of the product is then formed on the blank by the 3D printing system.

In the embodiment shown in Fig. 1, the print head 200 and the positioning platform 300 are movable, and driven by the robot 100 and the spherical movement device. Therefore, with aid of the cooperation of the robot 100 and the spherical movement device, the print head may move over a 3D curved surface or a 3D curve with respect to the surface of the positioning platform.

### Second example

In the second non-claimed example disclosed herewith, the print head is stationary, although not shown. The first movement device for manipulating the positioning platform is constructed to drive the positioning platform to move in the first direction X, the second direction Y, and the third direction Z perpendicular to each other, and to rotate about at least two of the first direction X, the second direction Y, and the third direction Z. That is, in the second example, the first movement device may comprise a robot with at least five freedoms.

In the second example, the print head is stationary, and the first movement device for manipulating the positioning platform is constructed to drive the positioning platform to move in the first direction X, the second direction Y, and the third direction Z perpendicular to each other, and to rotate about the first direction X, the second direction Y, and the third direction Z. That is, the first movement device may comprise a robot with six freedoms.

In the second example, the first movement device may comprise, for example, a planar articulated robot, a six-axis robot, a Cartesian coordinate robot, a serial robot, a parallel robot or a serial-parallel robot.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles of the disclosure, the scope of which is defined in the claims

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A 3D printing system, comprising:
a print head (200) constructed to print a product;
a positioning platform (300) constructed to support and position the product to be printed thereon; and
a first movement device constructed to manipulate the positioning platform (300), wherein the first movement device is constructed so that the positioning platform (300) is moved with respect to the print head (200) in a first direction (X), a second direction (Y) and a third direction (Z) perpendicular to each other, and rotated with respect to the print head (200) about at least two of the first, second and third directions (X, Y, Z), **characterized in that** the first movement device comprises a spherical movement device; and **in that** the spherical movement device comprises:
a first rotation driver (510) having an output shaft rotating about the first direction (X);
a second rotation driver (520) having an output shaft rotating about the second direction (Y) perpendicular to the first direction (X);
a first quarter arc linkage (501), one end of which is connected to the output shaft of the first rotation driver (510);
a second quarter arc linkage (502), one end of which is pivotally connected to the positioning platform (300), and the other end of which is pivotally connected to the other end of the first quarter arc linkage (501); and
a third quarter arc linkage (503), one end of which is connected to the output shaft of the second rotation driver (520), and the other end of which is pivotally connected to the positioning platform (300),
wherein extending lines of a pivotal axis at a joint of the first quarter arc linkage and the second quarter arc linkage, a pivotal axis at a joint of the second quarter arc linkage and the positioning platform, a pivotal axis at a joint of the third quarter arc linkage and the positioning platform, an axis of the output shaft of the first rotation driver, and an axis of the output shaft of the second rotation driver intersect at the same point.

2. The 3D printing system according to claim 1, wherein
the print head is constructed stationary; and
the first movement device is constructed to drive the positioning platform (300).

3. The 3D printing system according to claim 1, further comprising a second movement device constructed to manipulate the printing head (200) to move in at least one direction, and/or to rotate about at least one direction.

4. The 3D printing system according to claim 3, wherein the second movement device comprises a robot (100) with at least three freedoms.

5. The 3D printing system according to claim 4, wherein the robot (100) is constructed to drive the printing head (200) to move in the first direction (X), the second direction (Y) and the third direction (Z) perpendicular to each other.

6. The 3D printing system according to claim 4, wherein
the robot (100) comprises a planar articulated robot, a six-axis robot, a Cartesian coordinate robot, a serial robot, a parallel robot or a serial-parallel robot.

7. The 3D printing system according to any one of claims 1 to 6, wherein
the positioning platform (300) is mounted on the spherical movement device.

8. The 3D printing system according to any one of claims 1 to 7, wherein the same point is located at a geometric center of the positioning platform (300).

9. The 3D printing system according to claim 8, wherein
the first rotation driver (510) and the second rotation driver (520) are mounted on a first vertical mounting plate (11) and a second vertical mounting plate (12), respectively, which are provided on a base (10).

10. The 3D printing system according to claim 4, wherein
materials (400), which are sprayed from the print head (200) to form the product, are provided by a material supply unit mounted on an end-effector of the robot (100).

## Patentansprüche

1. 3D-Drucksystem, umfassend:
einen Druckkopf (200), der zum Bedrucken eines Produkts konstruiert ist;
eine Positionier-Plattform (300), die so konstruiert ist, dass das zu bedruckende Produkt darauf getragen und positioniert wird; sowie
eine erste Bewegungsvorrichtung, die zum Manipulieren der Positionier-Plattform (300) konstruiert ist,
wobei die erste Bewegungsvorrichtung so konstruiert ist, dass die Positionier-Plattform (300) in Bezug auf den Druckkopf (200) in einer ersten Richtung (X), einer zweiten Richtung (Y) und einer dritten Richtung (Z) bewegt wird, die senkrecht zueinander sind, und in Bezug auf den Druckkopf (200) um wenigstens zwei von der ersten, der zweiten und der dritten Richtung (X, Y, Z) gedreht wird, **dadurch gekennzeichnet, dass** die erste Bewegungsvorrichtung eine sphärische Bewegungsvorrichtung umfasst; und dass die sphärische Bewegungsvorrichtung umfasst:
eine erste Dreh-Antriebseinrichtung (510) mit einer Ausgangswelle, die um die erste Richtung (X) herum rotiert;
eine zweite Dreh-Antriebseinrichtung (520) mit einer Ausgangswelle, die um die zweite Richtung (Y) herum rotiert, die senkrecht zu der ersten Richtung (X) ist;
ein erstes Viertelkreis-Gelenk (501), dessen eines Ende mit der Ausgangswelle der ersten Dreh-Antriebseinrichtung (510) verbunden ist;
ein zweites Viertelkreis-Gelenk (502), dessen eines Ende schwenkbar mit der Positionier-Plattform (300) verbunden ist und dessen anderes Ende schwenkbar mit dem anderen Ende des ersten Viertelkreis-Gelenks (501) verbunden ist; sowie
ein drittes Viertelkreis-Gelenk (503), dessen eines Ende mit der Ausgangswelle der zweiten Dreh-Antriebseinrichtung (520) verbunden ist und dessen anderes Ende schwenkbar mit der Positionier-Plattform (300) verbunden ist,
wobei sich Verlängerungslinien einer Schwenkachse an einer Verbindung des ersten Viertelkreis-Gelenks und des zweiten Viertelkreis-Gelenks, einer Schwenkachse an einer Verbindung des zweiten Viertelkreis-Gelenks und der Positionier-Plattform, einer Schwenkachse an einer Verbindung des dritten Viertelkreis-Gelenks und der Positionier-Plattform, einer Achse der Ausgangswelle der ersten Dreh-Antriebseinrichtung und einer Achse der Ausgangswelle der zweiten Dreh-Antriebseinrichtung an dem gleichen Punkt schneiden.

2. 3D-Drucksystem nach Anspruch 1, wobei
der Druckkopf stationär konstruiert ist; und
die erste Bewegungsvorrichtung zum Antreiben der Positionier-Plattform (300) konstruiert ist.

3. 3D-Drucksystem nach Anspruch 1, das des Weiteren eine zweite Bewegungsvorrichtung umfasst, die so konstruiert ist, dass sie den Druckkopf (200) so manipuliert, dass er sich in wenigstens einer Richtung bewegt und/oder um wenigstens eine Richtung herum rotiert.

4. 3D-Drucksystem nach Anspruch 3, wobei die zweite Bewegungsvorrichtung einen Roboter (100) mit wenigstens drei Freiheitsgraden umfasst.

5. 3D-Drucksystem nach Anspruch 4, wobei der Roboter (100) so konstruiert ist, dass er den Druckkopf (200) so antreibt, dass er sich in der ersten Richtung (X), der zweiten Richtung (Y) und der dritten Richtung (Z) bewegt, die senkrecht zueinander sind.

6. 3D-Drucksystem nach Anspruch 4, wobei
der Roboter (100) einen planaren Gelenkarmroboter, einen Sechs-Achs-Roboter, einen kartesischen Roboter, einen seriellen Roboter, einen parallelen Roboter oder einen seriell-parallelen Roboter umfasst.

7. 3D-Drucksystem nach einem der Ansprüche 1 bis 6, wobei
die Positionier-Plattform (300) an der sphärischen Bewegungsvorrichtung montiert ist.

8. 3D-Drucksystem nach einem der Ansprüche 1 bis 7, wobei sich der gleiche Punkt an einem geometrischen Mittelpunkt der Positionier-Plattform (300) befindet.

9. 3D-Drucksystem nach Anspruch 8, wobei
die erste Dreh-Antriebseinrichtung (510) und die zweite Dreh-Antriebseinrichtung (520) an einer ersten vertikalen Montageplatte (11) bzw. einer zweiten vertikalen Montageplatte (12) montiert sind, die auf einer Basis (10) vorhanden sind.

10. 3D-Drucksystem nach Anspruch 4, wobei
Materialien (400), die über den Druckkopf (200) verspritzt werden, um das Produkt auszubilden, von einer Materialzufuhr-Einheit bereitgestellt werden, die an einem Endeffektor des Roboters (100) montiert ist.

## Revendications

1. Système d'impression 3D, comprenant :
une tête d'impression (200) conçue pour imprimer un produit ;
une plate-forme de positionnement (300) conçue pour supporter et positionner le produit à imprimer dessus ; et
un premier dispositif de déplacement conçu pour manipuler la plate-forme de positionnement (300), dans lequel le premier dispositif de déplacement est conçu de telle sorte que la plate-forme de positionnement (300) est déplacée par rapport à la tête d'impression (200) dans une première direction (X), une deuxième direction (Y) et une troisième direction (Z) perpendiculaires les unes aux autres, et tournée par rapport à la tête d'impression (200) autour d'au moins deux des première, deuxième et troisième directions (X, Y, Z),
**caractérisé en ce que**
le premier dispositif de déplacement comprend un dispositif de déplacement sphérique ; et **en ce que** le dispositif de déplacement sphérique comprend :
un premier dispositif d'entraînement en rotation (510) ayant un arbre de sortie tournant autour de la première direction (X) ;
un second dispositif d'entraînement en rotation (520) ayant un arbre de sortie tournant autour de la deuxième direction (Y) perpendiculaire à la première direction (X) ;
une première liaison de quart d'arc (501), dont une extrémité est reliée à l'arbre de sortie du premier dispositif d'entraînement en rotation (510) ;
une deuxième liaison de quart d'arc (502), dont une extrémité est reliée de manière pivotante à la plate-forme de positionnement (300), et dont l'autre extrémité est reliée de manière pivotante à l'autre extrémité de la première liaison de quart d'arc (501) ; et une troisième liaison de quart d'arc (503), dont une extrémité est reliée à l'arbre de sortie du second dispositif d'entraînement en rotation (520), et dont l'autre extrémité est reliée de manière pivotante à la plate-forme de positionnement (300),
dans lequel des lignes d'extension d'un axe de pivotement au niveau d'une articulation de la première liaison de quart d'arc et de la deuxième liaison de quart d'arc, d'un axe de pivotement au niveau d'une articulation de la deuxième liaison de quart d'arc et de la plate-forme de positionnement, d'un axe de pivotement au niveau d'une articulation de la troisième liaison de quart d'arc et de la plate-forme de positionnement, d'un axe de l'arbre de sortie du premier dispositif d'entraînement de rotation, et d'un axe de l'arbre de sortie du second dispositif d'entraînement en rotation s'entrecoupent au même point.

2. Système d'impression 3D selon la revendication 1, dans lequel la tête d'impression est conçue stationnaire ; et
le premier dispositif de déplacement est conçu pour entraîner la plate-forme de positionnement (300).

3. Système d'impression 3D selon la revendication 1, comprenant en outre un second dispositif de déplacement conçu pour manipuler la tête d'impression (200) pour la déplacer dans au moins une direction, et/ou pour la tourner autour d'au moins une direction.

4. Système d'impression 3D selon la revendication 3, dans lequel le second dispositif de déplacement comprend un robot (100) avec au moins trois libertés.

5. Système d'impression 3D selon la revendication 4, dans lequel le robot (100) est conçu pour entraîner la tête d'impression (200) pour la déplacer dans la première direction (X), la deuxième direction (Y) et la troisième direction (Z) perpendiculaires les unes aux autres.

6. Système d'impression 3D selon la revendication 4, dans lequel le robot (100) comprend un robot articulé plan, un robot à six axes, un robot de coordonnées cartésiennes, un robot série, un robot parallèle ou un robot série-parallèle.

7. Système d'impression 3D selon l'une quelconque des revendications 1 à 6, dans lequel
la plate-forme de positionnement (300) est montée sur le dispositif de déplacement sphérique.

8. Système d'impression 3D selon l'une quelconque des revendications 1 à 7, dans lequel le même point est situé au niveau d'un centre géométrique de la plateforme de positionnement (300).

9. Système d'impression 3D selon la revendication 8, dans lequel le premier dispositif d'entraînement en rotation (510) et le second dispositif d'entraînement en rotation (520) sont montés sur une première plaque de montage verticale (11) et une seconde plaque de montage verticale (12), respectivement, qui sont agencées sur une base (10).

10. Système d'impression 3D selon la revendication 4, dans lequel des matériaux (400), qui sont pulvérisés à partir de la tête d'impression (200) pour former le produit, sont fournis par une unité d'alimentation en matériaux montée sur un effecteur terminal du robot (100).
